# EUROPÄISCHE PATENTANMELDUNG

(11) **EP 1 600 731 A2**
(43) Veröffentlichungstag der Anmeldung: **30.11.2005**
(21) Anmeldenummer: 05104227.3
(22) Anmeldetag: 19.05.2005
(51) Int. Cl.: G01B 11/275

(54) **Messvorrichtung und -verfahren für Geometriedaten des Fahrwerks eines Kraftfahrzeuges mit Mitteln zur automatischen Adaption auf den am Fahrzeug montierten Radtyp**

(30) Priorität: 27.05.2004 DE 102004026563
(71) Anmelder: SIEMENS AKTIENGESELLSCHAFT, 80333 München (DE)
(72) Erfinder: Jahn, Lars, 90431 Nürnberg (DE); Spies, Walter, 92361 Berngau (DE)

(57) **Zusammenfassung**

Messvorrichtung und -verfahren für die Geometriedaten des Fahrwerkes (100) eines Kraftfahrzeugs, mit einem Achsenvermessungssystem (200), das Mittel zur Verarbeitung (201) eines Messalgorithmus für die Bestimmung der Geometriedaten aufweist, und einem Adaptionssystem (300), das aufweist Bilderfassungsmittel (301,302) zur Erfassung der Oberfläche von mindestens einem am Fahrwerk (100) des Kraftfahrzeugs montierten Rades (102,104), Bildauswertemittel (303), welche die Struktur der erfassten Oberfläche eines Rades (102,104) des Kraftfahrzeugs analysieren (304), einem vorbekannten Radtyp zuordnen (305) und einen, dem Radtyp zugewiesenen, optimierten Messalgorithmen auswählen (306), und Lademittel (307), welche den optimierten Messalgorithmus, der für den zugeordneten Radtyp ausgewählt wurde (306), in die Verarbeitungsmittel (201) des Achsenvermessungssystems (300) laden.

## Beschreibung

Messvorrichtung für Geometriedaten des Fahrwerks eines Kraftfahrzeuges mit Mitteln zur automatischen Adaption auf den am Fahrzeug montierten Radtyp

Die Erfindung betrifft eine Vorrichtung zur Messung von Geometriedaten an den Achsen eines Kraftfahrzeuges. Unter Geometriedaten werden hier insbesondere die Erfassung der Achsengeometrie und der Karosseriehöhe verstanden. So werden beispielsweise bei der Achsengeometrie insbesondere die Spur und der Sturz der an den Achsen eines Fahrzeugs befindlichen Räder bestimmt. Weiterhin wird z.B. bei der Messung der Karosseriehöhe der Abstand z.B. eines Radmittelpunktes zu einer Bezugslinie an der Fahrzeugkarosserie bestimmt, z.B. zur Unterkante des dazugehörigen Radhauses. Stimmen diese Messwerte nicht mit vorgegebenen Sollwerten überein, so muss die Achsengeometrie und gegebenenfalls die Karosseriehöhe durch Einstellarbeiten am Fahrwerk nachjustiert werden, um ein optimales Abrollverhalten des Kraftfahrzeuges auf der Fahrbahn zu gewährleisten. In der Praxis können zur Messung der Geometriedaten an den Achsen berührungslose Achsenvermessungssysteme eingesetzt werden. Bei diesen wird eine optische Struktur, z.B. ein aufgefächerter Laserpunkt, auf den Reifenmantel des an einer Achse befindlichen Rades projiziert. Das Abbild der optischen Struktur wird mit einer Kamera aufgenommen und in der Messvorrichtung ausgewertet. Die Auswertung solcher Projektionsabbilder, insbesondere die längeunmäßige Ausmessung der Projektionsabbilder auf dem Reifenmantel, ermöglicht auf berührungslose, d.h. rein optische Weise, eine Bestimmung von Messgrößen der oben genannten Art.

Bei einer bekannten Ausführung eines derartigen berührungslosen Achsenvermessungssystems werden z.B. Normalenvektoren der Räder einer Achse in Bezug auf ein gemeinsames Referenzsystem bestimmt. Die insbesondere winkelmäßigen Abweichungen dieser Normalenvektoren von tatsächlich ermittelten Vektoren auf einer Radebene sind ein Maß für die gewünschten Messwerte. Hierzu wird vom berührungslosen Achsenvermessungssystem z.B. unter Einsatz eines Laserprojektionssystems zunächst ein sogenannter Hochpunkt auf dem Mantel des Reifens eines auszumessenden Rades gesucht. Die Platzierung eines Fahrzeugs und damit dessen Räder vor dem Achsenvermessungssystem kann z.B. in einer Fertigungsanlage nicht exakt positionsgenau vorgenommen werden, sondern weist eine gewisse Schwankung auf. Die Suche nach einem geeigneten Hochpunkt kann von einem laserbasierten Achsenmesssystem durch Verfahren des Laserprojektionspunktes selbsttätig vorgenommen werden. Hierzu werden im Achsenvermessungssystem Reflexionswerte von der Reifenoberfläche mit Hilfe eines Algorithmus ausgewertet. Mit dem Hochpunkt können dann die Radebene bestimmt und die gewünschten Messwerte kalkuliert werden.

Insbesondere bei einem berührungslosen Achsenvermessungssystem der oben beschriebenen Art kann das Problem auftreten, dass die Genauigkeit der Messung von der Oberflächenstruktur des jeweiligen Radtyps abgängig ist, d.h. von der jeweiligen Kombination von Reifen und Felge an einer Achse. Die geometrischen Oberflächenstrukturen eines Radtyps können abhängig vom jeweils eingesetzten Reifen- und Felgentyp stark unterschiedlich sein. Beeinflussende Faktoren sind insbesondere die Flankenformen des Reifenmantels und die Struktur der Felgenoberfläche, z.B. Höhen, Krümmungen und Rauhigkeiten der jeweiligen Oberfläche, auch reifentypspezifische Verformungen des Reifenmantels, erhabene Beschriftungen, Noppen und sonstige Erhöhungen aller Art. Zur Verbesserung der Messgenauigkeit ist es möglich, wenn beeinflussende Faktoren der oben genannten Art bei dem im Achsenvermessungssystem eingesetzten und zur Auswertung der von der Reifenoberfläche gewonnenen Reflexionswerten dienenden Algorithmus berücksichtigt werden. Ein derartiger Auswertealgorithmus kann also bezüglich bestimmter Radtypen optimiert werden.

In der Praxis, z.B. in einer Fertigungs- oder Serviceeinrichtung für Kraftfahrzeuge, tritt aber das Problem auf, dass verschiedene Exemplare eines bestimmten Fahrzeugtyps mit unterschiedlichen Radtypen ausgerüstet sein können. Es ist dann gewünscht, dass es mit Hilfe eines Achsenvermessungssystems möglich sein soll, auch unterschiedliche Radtypen auszumessen. Dabei tritt aber das Problem auf, dass ein Algorithmus in einem Achsenvermessungssystem, mit dem mehrere Radtypen gemessen werden müssen, bezüglich der Messgenauigkeit aber für jeden einzelnen Radtyp nur einen Kompromiss darstellen kann. Es kann in der Praxis sogar vorkommen, dass der in einem Achsmesssystem bearbeitete Algorithmus für bestimmte Radtypen, d.h. Reifen- und Felgekombinationen, ungeeignet ist. So kann z.B. bereits die Suche nach einem Hochpunkt bei speziellen Radtypen fehlschlagen, indem z.B. das Laserprojektionssystem auf Grund einer niedrigen Höhe des Reifenmantels und einer geringen Krümmung desselben, z.B. bei einem Niederquerschnittsreifen, einen auf der Felge liegenden und somit für eine Messung ungeeigneten Hochpunkt anfährt. In diesem Fall kann in einer Fertigungsanlage für Kraftfahrzeuge der im Achsenvermessungssystem verarbeitete Algorithmus z.B. von einem Werker zwar manuell umgeschaltet werden. Eine händische Umschaltung durch eine Bedienperson ist aber aufwendig und vor allem fehleranfällig.

Der Erfindung liegt die Aufgabe zu Grunde eine Vorrichtung anzugeben, welche eine automatische Messung von Geometriedaten am Fahrwerk eines Kraftfahrzeugs, insbesondere an dessen Achsen, mit einer hohen Messgenauigkeit auch dann möglich macht, wenn diese mit unterschiedlichen Radtypen ausgerüstet sind.

Die Aufgabe wird gemäß der Erfindung durch die im Anspruch 1 angegebene Messvorrichtung gelöst. Vorteilhafte weitere Ausgestaltungen der Erfindung sind in den Unteransprüchen angegeben. Weiterhin ist ein Verfahren zum Betrieb einer derartigen Messvorrichtung angegeben.

Die erfindungsgemäße Messvorrichtung für die Geometriedaten des Fahrwerkes eines Kraftfahrzeugs enthält ein Achsenvermessungssystem, das Mittel zur Verarbeitung eines Messalgorithmus für die Bestimmung der Geometriedaten aufweist. Weiterhin ist ein Adaptionssystem vorhanden, welches auf das Achsenvermessungssystem einwirkt. Das Adaptionssystem weist Bilderfassungsmittel zur Erfassung der Oberfläche von mindestens einem am Fahrwerk des Kraftfahrzeugs montierten Rades auf. Weiterhin sind Bildauswertemittel vorhanden, welche die Struktur der erfassten Oberfläche eines Rades des Kraftfahrzeugs analysieren und einem vorbekannten Radtyp zuordnen. Da nun der am Kraftfahrzeug montierte Radtyp bekannt ist, kann das Adaptionssystem einen, dem Radtyp zugewiesenen, optimierten Messalgorithmen auswählen. Dieser wird über Lademittel in die Verarbeitungsmittel des Achsenvermessungssystems laden.

Die Erfindung bietet den Vorteil, dass für jeden Radtyp, d.h. für jede mögliche, z.B. in einer KFZ- Montageanlage an einem fertiggestellten Fahrzeug montierten Reifen-Felge-Kombination, ein optimierte Messalgorithmus eingesetzt werden kann.

Die Geometriedaten des Fahrwerkes eines Kraftfahrzeuges können somit in jedem Fall mit einem möglichst geringsten Messfehler bestimmt werden. Es nicht mehr notwendig, einen sogenannten "Kompromiss-Messalgorithmus" einzusetzen, der zwar für unterschiedliche Radtypen eingesetzt werden kann, der aber Messwerte mit mehr oder weniger großen Fehlern ergibt. Falls sich allerdings einzelne Radtypen nicht sehr stark unterscheiden, z.B. weil sie mit den gleichen Reifen versehen sind und Form bzw. Abmessungen der Felgen ähnlich sind, kann für solche vergleichbaren Radtypen auch derselbe Messalgorithmus eingesetzt werden.

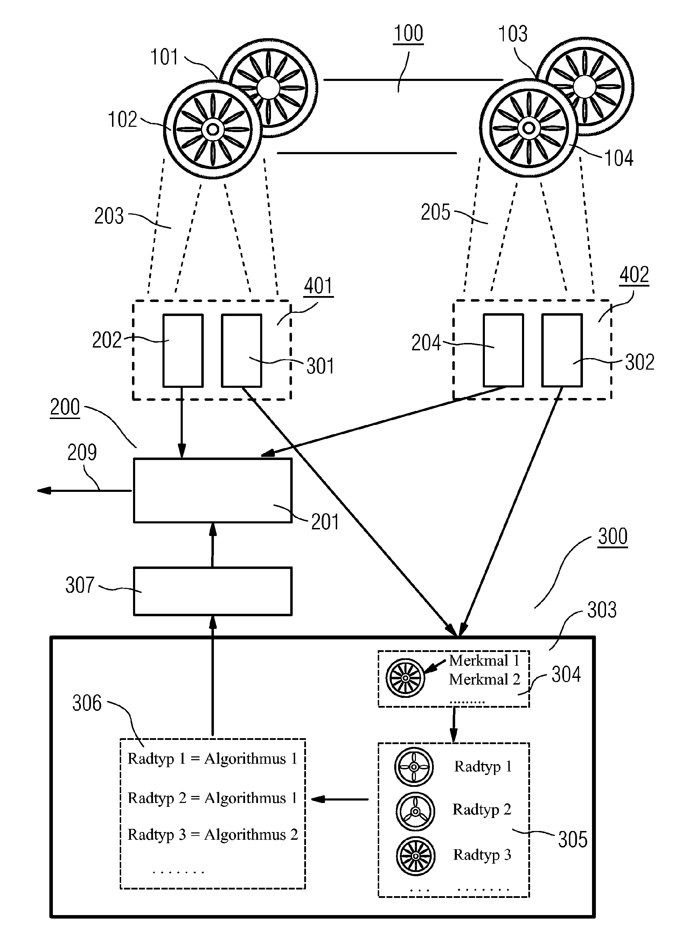

Die Erfindung und vorteilhafte weitere Ausführungsformen der Erfindung werden an dem in Fig. 1 dargestellten Blockschaltbild näher nachfolgend näher erläutert. Fig. 1 zeigt ein stilisiertes Fahrwerk 100 eines Fahrzeugs. Dabei sind die Räder der Vorderachse 101 und die Ränder der Hinterachse 103 symbolisch gezeigt, während der eigentliche Aufbau des Fahrzeugs und Details des Fahrwerkes aus Gründen der besseren Übersicht nicht dargestellt sind.

Ein bevorzugt auf optischer Basis arbeitendes Achsenvermessungssystem 200 wird zur Erfassung der Geometriedaten des Fahrwerks 100 eingesetzt. Dieses weist zum einen Bilderfassungseinheiten zur Aufnahme von optischen Abtastwerten von der Oberfläche zumindest eines Rades des Kraftfahrzeugs auf, und zum anderen eine Verarbeitungseinheit 201, in der ein Messalgorithmus zur Auswertung der optischen Abtastwerte bearbeitet wird. Die gewünschten Geometriedaten, z.B. Spur-, Sturz- und Karosseriehöhenwerte, stehen an einem Datenausgang 209 der Verarbeitungseinheit 201 zur Verfügung. Diese können über einen Datenbus an Handhabungsautomaten weitergeleitet werden, die selbsttätig Justierungen am Fahrwerk 100 vornehmen, falls die Messwerte am Datenausgang 209 von Sollwerten abweichen sollten.

Im Beispiel der Fig. 1 sind eine erste bzw. zweite Bilderfassungseinheit 202 bzw. 204 vorhanden, die über einen ersten bzw. zweiten optischen Erfassungsbereich 203 bzw. 205 die Oberfläche des linken Vorderrades 102 an der Vorderachse 101 bzw. des linken Hinterrades 104 an der Hinterachse 103 auswerten. Die Daten der Bilderfassungseinheiten 202, 204 werden der Verarbeitungseinheit 201 zugeführt und dort vom jeweils geladenen Messalgorithmus ausgewertet. Erfindungsgemäß ist zusätzlich ein Adaptionssystem 300 vorhanden. Dieses weist ebenfalls Bilderfassungsmittel zur Erfassung der Oberfläche von mindestens einem am Fahrwerk 100 des Kraftfahrzeugs montierten Rades auf. Im Beispiel der Fig. 1 sind hierzu eine erste bzw. zweite Bilderfassungseinheit 301 wiederum für das linke Vorderrad 102 an der Vorderachse 101 bzw. eine zweite Bilderfassungseinheit 302 für das linke Hinterrad 104 an der Hinterachse 103 vorhanden. Vorteilhaft können Videokameras als Bilderfassungseinheiten 301, 302 eingesetzt werden. Die davon erfasste Daten werden Bildauswertemitteln 303 zugeführt.

Die im Beispiel der Fig. 1 dargestellten Bildauswertemittel 303 weisen vorteilhaft drei Teilkomponenten auf, nämlich eine Analysekomponente 304, eine Zuordnungskomponente 305 und eine Auswahlkomponente 306. In der Analysekomponente 304 wird die Struktur der erfassten Oberfläche des Rades 102 bzw. 104 des Kraftfahrzeugs analysiert. Hierzu können vorteilhaft bekannte Methoden zur optischen Bildauswertung eingesetzt werden. So kann hierbei das aufgenommene Bild einer Reifen- Felge- Kombination bzw. ausgewählter Bildmerkmale derselben mit einer Reihe von vorher aufgenommenen Bildern bzw. bekannten Bildmerkmalen verschiedener Radtypen verglichen werden. Derartige Bildmerkmale können beispielsweise das Reifenprofil, die Größe der Reifen-Felge-Kombination, radiale Größen der Felge und des Reifens, Beschriftungen auf der Reifenflanke, der geometrische Aufbau der Felge bzw. Form, Höhe und Krümmung der Reifenflanke, und vieles mehr sein. Das Ergebnis der Analysekomponente 304 wird einer Zuordnungskomponente 305 zugeführt. In dieser sind die Merkmale von bekannten Radtypen hinterlegt. Falls ein bislang unbekannter Radtyp auftreten kann, z.B. wegen einer Änderung von Zulieferteilen in einer Fertigungsanlage, so können dessen Bilder bzw. Bildmerkmale in die Zuordnungskomponente 305 nachgeladen werden. Dieses bestimmt also den Radtyp, der an einem bezüglich der Achsengeometriedaten auszumessenden Fahrzeug montiert ist. Im Beispiel der Fig. 1 sind in der Zuordnungskomponente 305 die Daten von drei unterschiedlichen Radtypen 1, 2 und 3 gespeichert. Die von der Analysekomponente 304 gelieferten Daten bewirken in der Zuordnungskomponente 305 eine Auswahl des vorbekannten Radtyps 3.

Der ausgewählte Radtyp wird von der Zuordnungskomponente 305 schließlich an die Auswahlkomponente 306 übertragen. In dieser ist für jeden vorbekannten Radtyp ein optimierter Messalgorithmus hinterlegt. Der zu dem zugeordneten Radtyp gehörige optimierte Messalgorithmus kann nun ausgewählt werden, im Beispiel der Fig. 1 der Messalgorithmus 2. Dabei kann die Zuordnung des optimalen Messalgorithmus zu den jeweiligen Reifen- Felge- Kombinationen z.B. auf manuelle Weise oder z.B. durch sogenanntes Teachen durchgeführt werden. Anschließend wird der ausgewählte, optimierte Messalgorithmus mit Hilfe von Lademitteln 307 in die Verarbeitungsmittel 201 des Achsenvermessungssystems 300 geladen. Das Achsenvermessungssystem kann nun mit demjenigen Messalgorithmen, der auf den am aktuellen Fahrzeug montierten Radtyp optimiert und somit dafür am besten geeignet ist, die Geometriedaten mit einem möglichst geringen Messfehler erfassen. In der Auswahlkomponente 306 kann eine Zuordnungen von Radtyp zu Messalgorithmus beispielsweise wie folgt vorgenommen werden:

Felgendurchmesser A = Radtyp 1 = Messalgorithmus 1 Felgendurchmesser B = Radtyp 2 = Messalgorithmus 2 Reifenhersteller C, D = Radtyp 3 = Messalgorithmus 3 Reifenhersteller E, F = Radtyp 4 = Messalgorithmus 4 Reifenprofilform G, H = Radtyp 5 = Messalgorithmus 5 Reifenprofilform I, H, K = Radtyp 6 = Messalgorithmus 6

Für das erfindungsgemäße System kann auch ein handelsübliches Bildverarbeitungssystem zur Detektion des jeweils montierten Radtyps eingesetzt werden. Ein Bildverarbeitungssystem dieser Art besteht aus mindestens einer Kamera, die ein Bild von der Oberfläche des zu vermessenden Rades aufnimmt. Falls das verwendete Achsenvermessungssystem eine Kamera zur Erfassung von Reflexionswerten der Reifenoberfläche aufweist, so ist es gemäß einer besonders vorteilhaften Ausgestaltung der Erfindung möglich, auch diese Kamera als Bilderfassungsmittel für das zusätzliche Adaptionssystem und damit zur Erfassung des aktuell vorliegenden Radtyps einzusetzen. Im Beispiel der Fig. 1 ist dies durch einheitliche Bilderfassungseinheiten 401 bzw. 402 für die Vorderachse 101 bzw. für die Hinterachse 103 symbolisiert.

Der besondere Vorteil der Erfindung wird darin gesehen, dass eine Erhöhung der Messgenauigkeit ohne manuelle Eingriffe möglich ist. Es können Messungenauigkeiten bei Radtypen vermieden werden, die mit einem "Kompromiss-Algorithmus" nicht genau messbar sind. Weiterhin kann das System auf einfache Weise auf neue Radtypen eingestellt werden.

## Patentansprüche

1. Messvorrichtung für die Geometriedaten des Fahrwerkes (100) eines Kraftfahrzeugs, mit
a) einem Achsenvermessungssystem (200), das Mittel zur Verarbeitung (201) eines Messalgorithmus für die Bestimmung der Geometriedaten aufweist, und
b) einem Adaptionssystem (300), das aufweist
b1) Bilderfassungsmittel (301,302) zur Erfassung der Oberfläche von mindestens einem am Fahrwerk (100) des Kraftfahrzeugs montierten Rades (102,104),
b2) Bildauswertemittel (303), welche die Struktur der erfassten Oberfläche eines Rades (102,104) des Kraftfahrzeugs analysieren (304), einem vorbekannten Radtyp zuordnen (305) und einen, dem Radtyp zugewiesenen, optimierten Messalgorithmen auswählen (306), und
b3) Lademittel (307), welche den optimierten Messalgorithmus, der für den zugeordneten Radtyp ausgewählt wurde (306), in die Verarbeitungsmittel (201) des Achsenvermessungssystems (300) laden.

2. Messvorrichtung nach Anspruch 1, mit einem Achsenvermessungssystem (200) auf optischer Basis.

3. Messvorrichtung nach Anspruch 1 oder 2, wobei die Verarbeitungsmittel (201) des Achsenvermessungssystems (200) zumindest ein Bilderfassungsmittel (202,204) enthalten.

4. Messvorrichtung nach Anspruch 3, wobei die Bilderfassungsmittel (202,204) die Oberfläche zumindest eines Rades (102,104) des Kraftfahrzeugs auswerten.

5. Messvorrichtung nach Anspruch 3 oder 4, mit zumindest einem einheitlichen Bilderfassungsmittel (401,402) sowohl zur Speisung des Achsenvermessungssystems (200) als auch des Adaptionssystems (300).

6. Messvorrichtung nach einem der vorangegangenen Ansprüche mit Speichermitteln, in denen vorbekannten Radtypen zugewiesene, optimierte Messalgorithmen für die Lademittel (307) hinterlegt sind.

7. Verfahren zum Betrieb einer Messvorrichtung für die Geometriedaten des Fahrwerks (100) eines Kraftfahrzeugs nach einem der vorangegangenen Ansprüche, wobei
a) in einem ersten Schritt (304,305) das Adaptionssystem (300) den an einem Kraftfahrzeug montierten Radtyp detektiert,
b) in einem zweiten Schritt (306) das Adaptionssystem (300) den optimierten Messalgorithmus auswählt, der dem detektierten Radtyp zugeordnet ist, und diesen in die Verarbeitungsmittel (201) des Achsenvermessungssystems (200) lädt, und
c) in einem dritten Schritt (206) das Achsenvermessungssystem (200) die Geometriedaten Fahrwerks (100) des Fahrzeugs unter Verwendung des ausgewählten optimierten Messalgorithmus ermitteln.
